# FASCICULE DE BREVET EUROPEEN

(11) **EP 3 159 579 B1**
(45) Date de publication et mention de la délivrance du brevet: **25.11.2020**
(21) Numéro de dépôt: 16192120.0
(22) Date de dépôt: 04.10.2016
(51) Int. Cl.: F16H 59/02

(54) **BOITE DE VITESSES POUR EQUIPEMENT DE MOTOCULTURE ET EQUIPEMENT DE MOTOCULTURE COMPRENANT UNE TELLE BOITE DE VITESSES**
GETRIEBE FÜR AUSRÜSTUNG EINER MOTORISIERTEN LANDMASCHINE, UND AUSRÜSTUNG FÜR MOTORISIERTE LANDMASCHINE, DIE EIN SOLCHES GETRIEBE UMFASST
GEARBOX FOR MECHANISED FARMING DEVICE AND MECHANISED FARMING DEVICE INCLUDING SUCH A GEARBOX

(30) Priorité: 20.10.2015 FR 1560008
(43) Date de publication de la demande: 26.04.2017
(73) Titulaire: PUBERT HENRI SAS, 85110 Chantonnay (FR)
(72) Inventeur: GERBAUD, Nicolas, 85110 MONSIREIGNE (FR); VION, Peter, 85700 POUZAUGES (FR); LEJEUNE, Pierre, 85110 SAINTE-CECILE (FR)
(74) Mandataire: Vidon Brevets & Stratégie

(56) Documents cités:
- DE-A1- 1 944 173
- DE-C- 868 390
- FR-A1- 2 948 432
- US-A- 3 561 281
- US-A- 5 992 261

## Description

### 1. Domaine technique de l'invention

L'invention concerne les boîtes de vitesses pour équipements mobiles, en particulier les boîtes de vitesses pour équipements de motoculture, et plus spécifiquement les boîtes de vitesses pour motobineuses. L'invention concerne également les équipements de motoculture, et plus particulièrement les motobineuses et les motoculteurs, comprenant de telles boîtes de vitesses.

### 2. Arrière-plan technologique

Une boîte de vitesses pour équipement de motoculture est destinée à interconnecter des moyens moteurs d'un équipement de motoculture à des organes d'entraînement de l'équipement. Un tel équipement de motoculture est par exemple une motobineuse, un motoculteur, une débroussailleuse ou tout équipement équivalent.

Les équipements les plus perfectionnés comprennent des boîtes de vitesses comprenant une ou plusieurs vitesses de marche avant. Le passage d'une vitesse à une autre est obtenu par une action, en général manuelle, sur un sélecteur de vitesse qui permet par son déplacement, de modifier les rapports de transmission de la boîte de vitesses. Une telle boîte de vitesses est connue de la publication FR 2 948 432.

Certaines boîtes de vitesses disposent en outre d'une marche arrière pour faciliter les manœuvres, par exemple au voisinage d'un obstacle, telle qu'une racine, une pierre, etc., et d'un mécanisme de débrayage pour faciliter le changement d'allure et le passage de la marche avant à la marche arrière.

Il est connu que de telles boîtes de vitesses comprennent :
- un arbre d'entrée adapté pour être entraîné en rotation par des moyens moteurs,
- un arbre de sortie adapté pour entraîner des organes d'entraînement de l'équipement,
- un sélecteur de vitesse adapté pour coopérer avec un pignon monté mobile sur l'arbre d'entrée pour permettre par son déplacement une modification des rapports de transmission entre l'arbre d'entrée et l'arbre de sortie.

Ces boîtes de vitesses mettent en œuvre un grand nombre de pièces mécaniques complexes, et sont logées dans un carter fabriqué en aluminium, ce qui en fait des boîtes onéreuses, lourdes et encombrantes.

En outre, ces boîtes de vitesse étant destinées à êtres montés sur des équipements de motoculture, les roues ou les outils de l'équipement entraînés par l'intermédiaire de cette boîte de vitesses rencontrent fréquemment des obstacles, tel que des racines, des pierres et de manière générale des obstacles à la progression de l'équipement sur la surface traitée par l'équipement de motoculture. Un choc éventuel entre les roues ou les outils et un obstacle est susceptible de bloquer l'avancement de l'équipement alors que les roues ou les outils sont toujours entraînés par la boîte de vitesses. Il n'est donc pas rare, en cas de survenue d'un tel choc, qu'un organe de l'équipement ne casse, notamment l'arbre qui supporte les roues ou les outils ou une roue d'entraînement, voire qu'un organe de la boîte de vitesses casse, tel que l'arbre de sortie de la boîte ou un pignon interne. Pour pallier ce problème, certaines boîtes présentent des limiteurs de couple.

En outre, les carters de ces boîtes de vitesse sont alimentés en huile pour assurer un graissage de l'ensemble des organes logés dans le carter, notamment les arbres et pignons. Il est, par conséquent, souhaitable que l'étanchéité de ces carters soit optimale.

### 3. Objectifs de l'invention

Dès lors, l'invention vise à pallier au moins certains des inconvénients des boîtes de vitesses de l'état de la technique.

L'invention vise à fournir, dans au moins un mode de réalisation, un équipement de motoculture équipé d'une boîte de vitesse dont la maintenance est aisée et peu fréquente, qui présente une étanchéité optimale et une durée de vie supérieure aux boîtes de vitesses de l'état de la technique.

L'invention vise aussi à fournir, dans au moins un mode de réalisation, une boîte de vitesses compacte, moins lourde que les boîtes de l'art antérieur et économique à fabriquer.

L'invention vise aussi à fournir, dans au moins un mode de réalisation, une boîte de vitesses qui présente une protection contre la casse des organes de l'équipement en cas de choc entre les moyens d'entraînement de l'équipement et un obstacle.

### 4. Exposé de l'invention

Pour ce faire, l'invention concerne une boîte de vitesses pour équipement de motoculture, destinée à interconnecter des moyens moteurs à des organes d'entraînement de l'équipement, la boîte de vitesses comprenant :
- un arbre d'entrée adapté pour être entraîné en rotation par lesdits moyens moteurs,
- un arbre de sortie adapté pour entraîner lesdits organes d'entraînement de l'équipement,
- un pignon, dit pignon baladeur, monté mobile sur l'arbre d'entrée, et adapté pour occuper au moins une position de marche,
- un levier de sélection de vitesse solidaire d'une fourchette s'étendant à l'intérieur de la boîte de vitesses et adaptée pour coopérer avec ledit pignon baladeur, et permettre par son déplacement une modification de rapport de transmission entre l'arbre d'entrée et l'arbre de sortie.

Selon l'invention, une telle boîte de vitesses comprend en outre une bride de solidarisation du levier de sélection à la boîte de vitesses présentant une résistance à la rupture prédéterminée et adaptée pour se rompre si la force appliquée sur le levier de sélection dépasse une valeur prédéterminée.

La bride est ainsi conçue et dimensionnée de telle sorte qu'elle joue le rôle de fusible de façon à éviter les dommages internes à la boîte de vitesses (torsion de la fourchette notamment), qui engendrerait des coûts élevés de remise en état, en cas de mauvaise utilisation. La bride est conçue pour se rompre lorsque des efforts ou chocs anormaux sont appliqués sur le levier de sélection de vitesse. Cette bride peut être aisément remplacée par un technicien d'un service après vente en cas de rupture.

Selon un aspect particulier de l'invention, le carter de la boîte de vitesses est formé de deux demi-coques, dites respectivement demi-coque inférieure et demi-coque supérieure, agencées en regard l'une de l'autre et définissant un logement de réception des arbres, du pignon baladeur et de la fourchette notamment, lesdites demi-coques étant fabriquées en plastique injecté.

Ceci permet de réduire le poids de la boîte de vitesses et donc de l'équipement.

Selon un aspect particulier de l'invention, la fourchette est solidaire du levier de sélection de vitesse par le biais d'un doigt d'accouplement, ledit doigt d'accouplement s'étendant à travers une ouverture ménagée dans ladite demi-coque supérieure et étant monté par l'intérieur dudit carter.

Le montage du doigt d'accouplement par l'intérieur, plutôt que par l'extérieur du carter offre une meilleure étanchéité et minimise le risque de fuite d'huile provenant du carter de la boîte de vitesses.

Selon un aspect particulier de l'invention, la bride est montée pivotante sur ladite demi-coque supérieure.

Selon un aspect particulier de l'invention, ledit doigt d'accouplement s'étend dans un premier logement ménagé dans la bride.

Selon un aspect particulier de l'invention, le levier de sélection de vitesse est monté dans un deuxième logement ménagé dans la bride.

Selon un aspect particulier de l'invention, la bride est formée par deux demi-brides assemblées l'une à l'autre par des moyens de solidarisation.

Selon un aspect particulier de l'invention, une demi-bride porte un pivot sélecteur de vitesse.

Selon un aspect particulier de l'invention, le pivot sélecteur de vitesse comprend des crans destinés à coopérer avec un indexeur monté mobile en rotation sur ladite demi-coque supérieure.

L'invention concerne également un équipement de motoculture comprenant une boîte de vitesses selon l'invention.

Préférentiellement, l'équipement de motoculture selon l'invention appartient au groupe comprenant les motoculteurs, les débroussailleuses à roues, les motobineuses, les microbineuses, les faucheuses broyeuses, les émousseurs, les scarificateurs, et les aérateurs de pelouse.

L'invention concerne également une boîte de vitesses et un équipement muni d'une boîte de vitesses caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue en perspective éclatée d'une portion d'un équipement selon un mode de réalisation de l'invention sur laquelle sont représentées une boîte de vitesses selon un mode de réalisation de l'invention, un sélecteur de vitesse de la boîte de vitesses, la courroie d'embrayage, les poulies moteur et réceptrice, et le carter de la chaîne d'entraînement des outils,
- la figure 2 est une vue en perspective éclatée d'une boîte de vitesses selon un mode de réalisation de l'invention,
- la figure 3 est une vue de détail et de dessus d'une boîte de vitesses selon un mode de réalisation de l'invention,
- la figure 4 est une vue en coupe, dans un plan vertical, de la boîte de vitesses de la figure 3.

### 6. Description détaillée d'un mode de réalisation de l'invention

Une boîte de vitesses, ou de transmission, selon l'invention est destinée à être montée sur un équipement de motoculture tel une motobineuse.

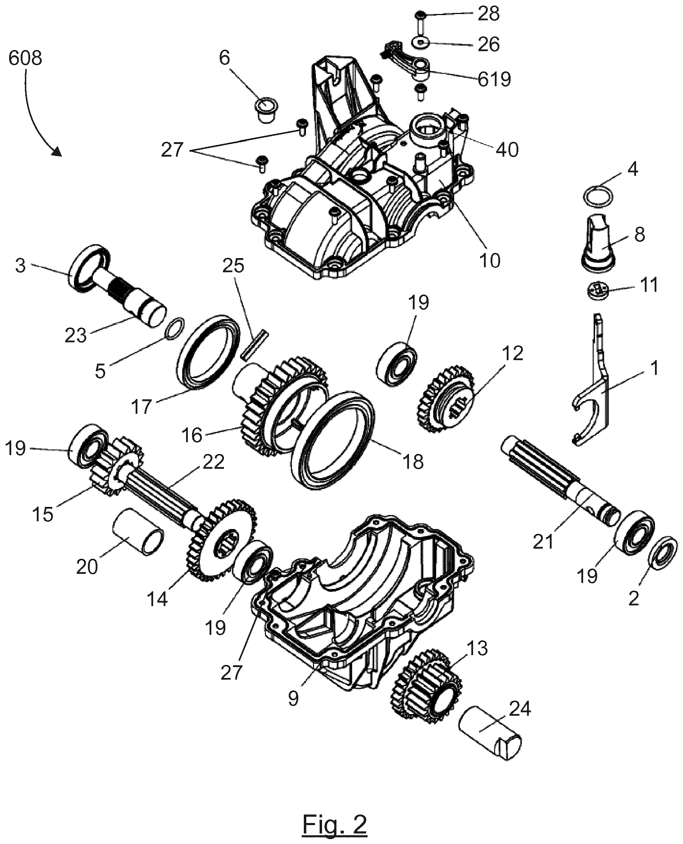

Dans toute la description détaillée qui suit en référence aux figures, sauf indication contraire, chaque pièce de la boîte de vitesses est décrite telle qu'elle est agencée lorsque les arbres d'entrée et de sortie de la boîte de vitesses s'étendent parallèlement au sol, le sélecteur de vitesses étant agencé sur le dessus de la boîte. Cet agencement est représenté notamment sur la figure 2. qui est une vue en perspective éclatée d'une portion d'une motobineuse selon un mode de réalisation de l'invention et notamment d'une boîte de vitesses selon un mode de réalisation de l'invention.

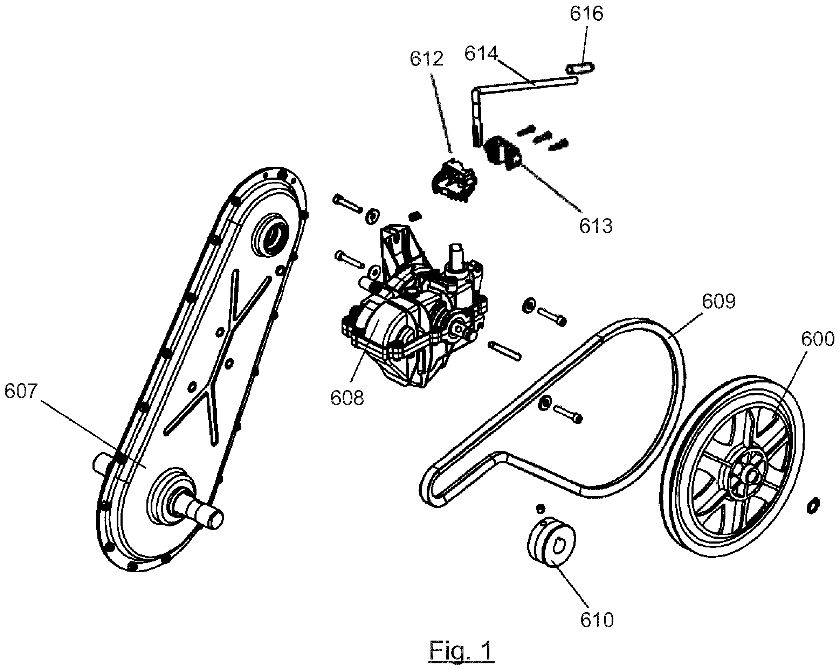

Comme illustré sur la figure 1, la motobineuse comprend de préférence, un châssis (non représenté) supportant la boîte de vitesses 608 selon l'invention, une roue de transport et deux outils de travail du sol (non représentés) montés en rotation sous le châssis autour d'un arbre transversal mû par une chaîne (non visible) disposée dans un carter 607. De façon classique, la chaîne est entraînée par l'axe d'une poulie, dite réceptrice, 600 située à l'arrière du châssis, au-dessus de ce dernier. La poulie réceptrice 600 est elle-même entraînée par un moteur thermique, situé à l'avant du châssis, l'arbre de sortie du moteur portant une poulie moteur 610 qui est reliée à la poulie réceptrice 600 par une courroie 609 d'embrayage. La poulie réceptrice 600 est en liaison avec la boîte de vitesses 608 et les outils.

La figure 2 présente en vue éclatée une boîte de vitesses selon un mode de réalisation de l'invention.

La boîte de vitesses 608 comprend un carter formé de deux demi-coques - une demi-coque 10 supérieure et une demi-coque 9 inférieure - à l'intérieur duquel sont logés un arbre 21 d'entrée, un arbre 23 de sortie, un arbre 22 intermédiaire, et un arbre 24 de marche arrière (visibles sur la figure 2). Selon le mode de réalisation des figures, les arbres 21 d'entrée et 23 de sortie sont coaxiaux.

Par ailleurs, dans ce mode de réalisation, la boîte de vitesses 608 fournit deux vitesses en marche avant et une vitesse en marche arrière, la marche arrière étant agencée entre les deux marches avant.

L'arbre 21 d'entrée est porté à une extrémité par un roulement 19 et à l'autre extrémité par l'intermédiaire d'un pignon 16 de sortie de boîte et d'un roulement 18 portant le pignon 16 de sortie de boîte. Le pignon 16 de sortie de boîte présente un arbre creux dans lequel est emmanché l'arbre 23 de sortie. Un joint 5 torique est disposé sur l'arbre 23 de sortie. Le pignon 16 de sortie de boîte comprend un alésage diamétral coïncidant avec un alésage diamétral ménagé dans l'arbre 23 de sortie. Cet alésage est destiné à recevoir une goupille 25 formant un fusible mécanique. Cette goupille 25 présente une résistance à la rupture prédéterminée, de telle sorte qu'elle puisse se rompre si le couple transmis par l'arbre d'entrée à l'arbre de sortie dépasse une valeur prédéterminée.

La boîte de vitesses 608 comprend également un arbre 22 intermédiaire, ou secondaire, porté par des logements hémi-circulaires ménagés dans les parois des demi-coques et pourvus de roulements 19. L'arbre 22 intermédiaire comprend deux pignons 14, 15 séparés l'un de l'autre par une entretoise 20, et désignés respectivement dans tout le texte par les termes de pignon 15 distal et pignon 14 proximal.

Le pignon 14 proximal est adapté pour coopérer avec le pignon 12 baladeur de l'arbre 21 d'entrée et le pignon 15 distal est adapté pour coopérer avec le pignon 16 de sortie de boîte dans lequel est emmanché l'arbre 23 de sortie.

La boîte de vitesses 608 comprend également un arbre 24 de marche arrière. Cette arbre 24 comprend un pignon 13 menant qui est adapté pour coopérer avec le pignon 12 baladeur, lorsque ce dernier est dans la position de marche arrière, et un pignon 13 mené qui est adapté pour entraîner le pignon 14 proximal de l'arbre 22 intermédiaire. Selon le mode de réalisation des figures, les pignons menant et mené sont accolés l'un à l'autre. Selon un autre mode de réalisation, ils peuvent être séparés par une entretoise.

Les arbres d'entrée 21, de sortie 23, intermédiaire 22 et de marche arrière 24 sont parallèles entre eux.

Selon un mode préférentiel de réalisation de l'invention, le changement de rapport de transmission se fait par l'intermédiaire d'un levier 614 de sélection (également appelé "levier de changement de vitesse" ou "sélecteur") agencé sur le dessus de la boîte de vitesses 608. Le levier 614 de sélection est solidaire d'une fourchette 1 de sélection qui agit directement sur le pignon 12 baladeur pour le déplacer le long de l'arbre 21 d'entrée. Cette fourchette 1 est maintenue en position par l'intermédiaire d'un guide fourchette 11 monté à l'extrémité inférieure de la fourchette 1.

L'extrémité supérieure de la fourchette 1 est logée dans un doigt 8 de connexion qui s'étend à travers une ouverture 40 ménagée dans la demi-coque 10 supérieure du carter de manière à ce qu'un utilisateur puisse actionner cette fourchette 1 de commande en manœuvrant le levier 614 de sélection. Cet aspect sera décrit plus en détail par la suite.

Chaque position du levier 614 de sélection correspond à un rapport de transmission prédéterminé entre l'arbre 21 d'entrée et l'arbre 23 de sortie. Chaque vitesse correspond donc à une position angulaire prédéterminée du levier 614 de sélection. Le passage d'une vitesse à une autre est obtenu par le déplacement du levier 614 de sélection, qui lui-même entraîne le déplacement de la fourchette 1, de manière à positionner le pignon 12 baladeur dans une position définissant le rapport de transmission entre l'arbre 21 d'entrée et l'arbre 23 de sortie.

La boîte de vitesses 608 est configurée de sorte que le pignon 12 baladeur puisse occuper trois positions distinctes le long de l'arbre 21 d'entrée : une première position de marche avant, dans laquelle un premier rapport de transmission est réalisé entre l'arbre 21 d'entrée et l'arbre 23 de sortie, les arbres 21, 23 tournant dans le même sens de rotation ; une deuxième position de marche avant, dans laquelle un deuxième rapport de transmission est réalisé entre l'arbre 21 d'entrée et l'arbre 23 de sortie, les arbres 21, 23 tournant dans le même sens de rotation ; et une position de marche arrière, dans laquelle un troisième rapport de transmission est réalisé entre l'arbre 21 d'entrée et l'arbre 23 de sortie, les arbres 21, 23 tournant dans des sens de rotation opposés.

En outre, la boîte de vitesses 608 est configurée de telle sorte que la position de marche arrière est située entre les deux positions de marche avant.

Les deux demi-coques 9, 10 du carter sont solidarisées l'une à l'autre par l'intermédiaire de vis 27. Ces deux demi-coques 9, 10 sont réalisées en plastique injecté (tel que du polyamide renforcé de fibres de verre) et non pas en aluminium comme pour les coques de l'art antérieur. Le carter de la boîte de vitesses 608 est par conséquent léger, peu coûteux à fabriquer, et néanmoins suffisamment robuste pour supporter les arbres et les moyens d'engrènement.

En outre, une fois le carter fermé, ce dernier peut être alimenté en huile pour assurer un graissage de l'ensemble des organes logés dans le carter, notamment les arbres et pignons. Un bouchon 6 étanche permet de maintenir l'huile à l'intérieur du carter et de vidanger ce dernier lorsque nécessaire.

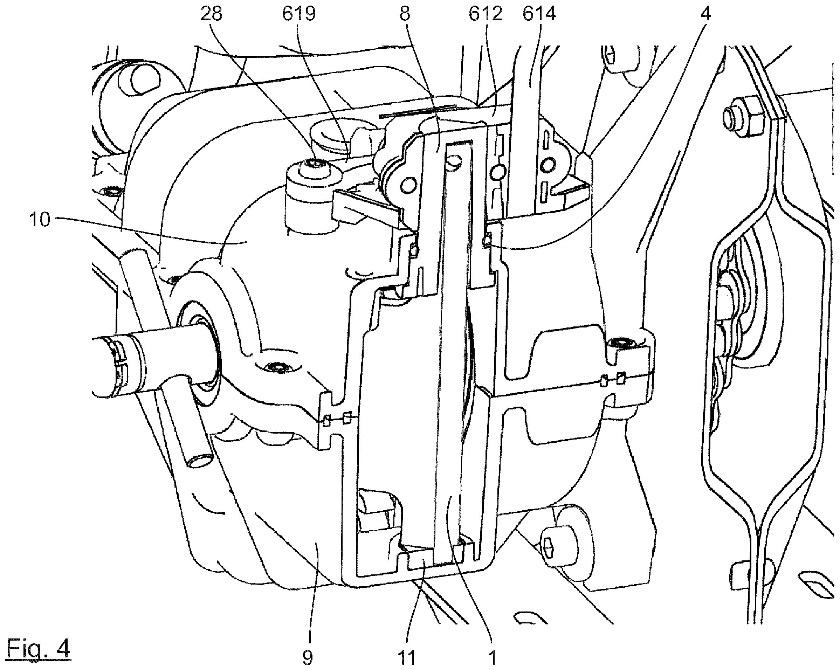

La figure 4 est une vue en coupe dans un plan vertical de la boîte de vitesses montrant le positionnement du levier 614 de sélection sur la bride 612, et le montage du doigt 8 de connexion ou d'accouplement de la fourchette 1 au levier 614 de sélection.

La demi-coque 10 supérieure comprend une ouverture 40 adaptée pour permettre à l'extrémité supérieure de la fourchette 1, qui est coiffée par le doigt 8 de connexion, de déboucher et d'être solidarisée au levier 614 de sélection par le biais d'une bride (formée par l'assemblage de deux demi-brides 612, 613) montée mobile en rotation sur la demi-coque 10 supérieure.

De façon avantageuse, le doigt 8 de connexion ou d'accouplement de la fourchette 1 au levier 614 de sélection est monté par l'intérieur du carter. On rappelle que les carters de ces boîtes de vitesse sont alimentés en huile pour assurer un graissage de l'ensemble des organes logés dans le carter, notamment les arbres et pignons.

Classiquement, ce doigt 8 de connexion est monté par l'extérieur, un tel montage constituant une zone de fuite d'huile potentielle, ce qui n'est pas souhaitable.

Le montage du doigt 8 de connexion par l'intérieur, plutôt que par l'extérieur du carter offre une meilleure étanchéité. Cette étanchéité est optimisée par la mise en œuvre d'un joint 4 d'étanchéité.

On note que le levier 614 de sélection porte un embout 616 à une extrémité et est disposé dans un logement ménagé à la jonction des deux demi-brides 612, 613 assemblées à son autre extrémité.

L'extrémité supérieure du doigt 8 de connexion débouche de l'ouverture 40 et est disposé dans un logement ménagé à la jonction des deux demi-brides 612, 613 assemblées par vissage (trois vis 620 dans cet exemple).

Les extrémités supérieures du doigt 8 et de la fourchette 1 s'étendent ainsi à travers la demi-coque 10 supérieure pour que la fourchette 1 puisse être commandée par le levier 614 de sélection de vitesses.

La demi-bride 612 coopère, d'une part, avec la demi-bride 613, et forme d'autre part un sélecteur de vitesse présentant des crans, ou créneaux, en « V » coopérant avec un élément indexeur de la vitesse.

La demi-bride 612 sélecteur, outre sa fonction double, dispose de deux butées latérales limitant les risques de défaillance (et notamment une torsion non souhaitée de la tête de fourchette 1) lors de mauvaises utilisations.

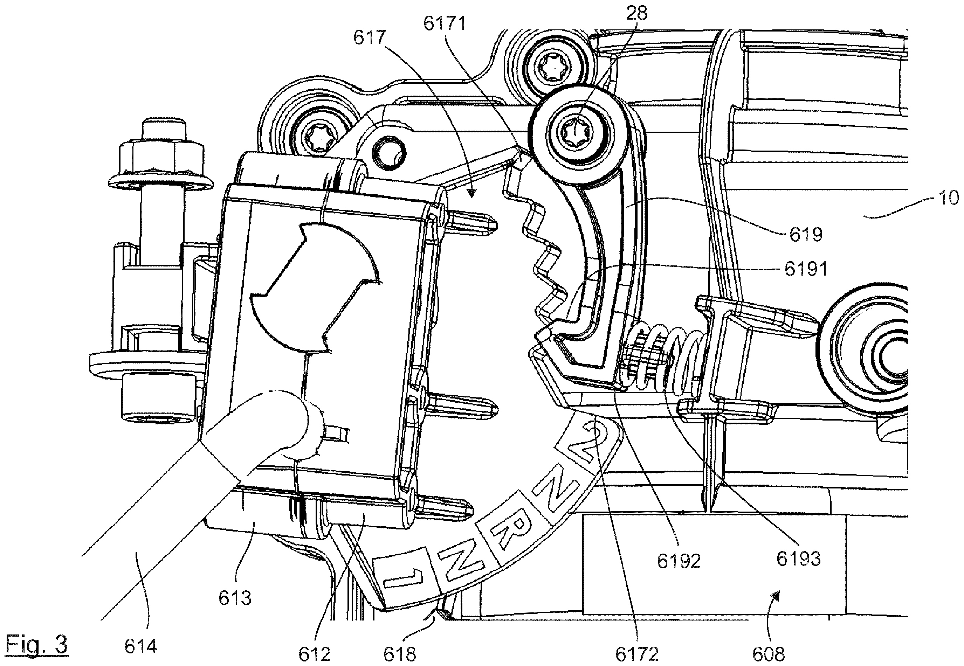

Plus précisément, la vue de dessus de la figure 3 montre un indicateur (mire) de repérage 618 de la vitesse sélectionnée agencé sur le dessus de la boîte de vitesses 608, et d'un pivot sélecteur 617 de vitesse qui est solidaire de la demi-bride 612 sélecteur 612. Ce pivot sélecteur 617 est cranté, les crans étant destinés à coopérer avec un indexeur, ou cliquet, 619 monté mobile en rotation sur le dessus de la boîte de vitesses 608 (par le biais d'une vis 28 et d'une rondelle 26 visibles sur la figure 2). L'indexeur 619 est maintenu en position par un ressort 6193 (l'indexeur 619 forme une butée ressort). Ce pivot sélecteur 617 comprend des repères visuels de la vitesse sélectionnée (en l'occurrence, les repères "1", "N", "R", "N", "2").

On note que le ressort 6193 est solidaire à une extrémité de la demi-coque 10 supérieure et à l'autre extrémité de l'indexeur 619, ce dernier étant vissé sur la demi-coque 10 supérieure par le biais d'une vis 28.

Lorsque la deuxième vitesse est sélectionnée (repère "2") par une action sur levier 614 de sélection de vitesses (ce qui fait pivoter la bride 612, 613), le cran 6171 est en regard de la surface 6191 (formant butée) de l'indexeur 619. Lorsque la première vitesse est sélectionnée (repère "1"), le cran 6172 est en regard de la surface 6192, (formant butée) de l'indexeur 619.

Outre sa fonction principale de fixation du levier 614 de sélection de vitesses sur le carter de la boîte de vitesses 608, cette bride 612, 613 est conçue et dimensionnée de telle sorte qu'elle joue aussi le rôle de fusible de façon à éviter les dommages internes à la boîte de vitesses 608 (torsion de la fourchette 1 notamment), qui engendrerait des coûts élevés de remise en état, en cas de mauvaise utilisation. La liaison entre les demi-brides 612, 613 est conçue pour se rompre lorsque des efforts ou chocs anormaux sont appliqués sur le levier 614 de sélection de vitesse. Ces demi-brides 612, 613 peuvent être aisément remplacées par un technicien d'un service après vente en cas de rupture.

L'invention ne se limite pas au seul mode de réalisation décrit.

La motobineuse telle que décrite dans la présente demande, peut être mis en œuvre avec une boîte de vitesse d'un type différent de celle représentée aux figures 1 à 4.

En particulier, une boîte de vitesses selon l'invention peut présenter une architecture interne différente. Par exemple, les arbres d'entrée et de sortie peuvent ne pas être coaxiaux et la boîte de vitesses peut présenter un nombre différent de vitesses, et notamment plus de deux rapports de marche avant.

Par ailleurs, il peut être prévu un câble de commande qui entraîne la rotation du sélecteur de vitesse dans un premier sens de rotation et un second câble de commande qui entraîne la rotation du sélecteur de vitesse dans le sens de rotation opposé.

## Revendications

1. Boîte de vitesses (608) pour un équipement de motoculture, destinée à interconnecter des moyens moteurs à des organes d'entraînement de l'équipement, la boîte de vitesses (608) comprenant :
- un arbre (21) d'entrée adapté pour être entraîné en rotation par lesdits moyens moteurs,
- un arbre (23) de sortie adapté pour entraîner lesdits organes d'entraînement de l'équipement,
- un pignon, dit pignon (12) baladeur, monté mobile sur l'arbre (21) d'entrée, et adapté pour occuper au moins une position de marche,
- un levier (614) de sélection de vitesse solidaire d'une fourchette (1) s'étendant à l'intérieur de la boîte de vitesses (608) et adaptée pour coopérer avec ledit pignon (12) baladeur, et permettre par son déplacement une modification de rapport de transmission entre l'arbre (21) d'entrée et l'arbre (23) de sortie,
**caractérisée en ce qu'**elle comprend en outre une bride (612, 613) de solidarisation du levier (614) de sélection à la boîte de vitesses (608) présentant une résistance à la rupture prédéterminée et adaptée pour se rompre si la force appliquée sur le levier (614) de sélection dépasse une valeur prédéterminée.

2. Boîte de vitesses (608) selon la revendication 1, **caractérisée en ce que** le carter de la boîte de vitesses (608) est formé de deux demi-coques, dites respectivement demi-coque (9) inférieure et demi-coque (10) supérieure, agencées en regard l'une de l'autre et définissant un logement de réception des arbres (21, 23), du pignon (12) baladeur et de la fourchette (1) notamment, lesdites demi-coques (9, 10) étant fabriquées en plastique injecté.

3. Boîte de vitesses (608) selon la revendication 2, **caractérisée en ce que** la fourchette (1) est solidaire du levier (614) de sélection de vitesse par le biais d'un doigt (8) d'accouplement, ledit doigt (8) d'accouplement s'étendant à travers une ouverture (40) ménagée dans ladite demi-coque (10) supérieure et étant monté par l'intérieur dudit carter.

4. Boîte de vitesses (608) selon la revendication 3, **caractérisée en ce que** la bride (612, 613) est montée pivotante sur ladite demi-coque (10) supérieure.

5. Boîte de vitesses (608) selon la revendication 3 ou 4, **caractérisée en ce que** ledit doigt (8) d'accouplement s'étend dans un premier logement ménagé dans la bride (612, 613).

6. Boîte de vitesses (608) selon l'une des revendications 1 à 5, **caractérisée en ce que** le levier (614) de sélection de vitesse est monté dans un deuxième logement ménagé dans la bride (612, 613).

7. Boîte de vitesses (608) selon l'une des revendications 1 à 6, **caractérisée en ce que** la bride (612, 613) est formée par deux demi-brides assemblées l'une à l'autre par des moyens de solidarisation (620).

8. Boîte de vitesses (608) selon la revendication 7, **caractérisée en ce qu'**une demi-bride (612) porte un pivot sélecteur (617) de vitesse.

9. Boîte de vitesses (608) selon la revendication 8, **caractérisée en ce que** le pivot sélecteur (617) de vitesse comprend des crans (6171) destinés à coopérer avec un indexeur (619) monté mobile en rotation sur ladite demi-coque (10) supérieure.

10. Equipement de motoculture **caractérisé en ce qu'**il comprend une boîte de vitesses (608) selon l'une des revendications 1 à 9.

## Patentansprüche

1. Getriebe (608) für eine motorisierte landwirtschaftliche Vorrichtung, welches dazu bestimmt ist, Motormittel mit Antriebsorganen der Vorrichtung zu verbinden, wobei das Getriebe (608) umfasst:
- eine Eingangswelle (21), die dafür eingerichtet ist, von den Motormitteln drehend angetrieben zu werden,
- eine Abtriebswelle (23), die dafür eingerichtet ist, die Antriebsorgane der Vorrichtung anzutreiben,
- ein Ritzel, Schieberad (12) genannt, das beweglich auf der Eingangswelle (21) angebracht ist und dafür eingerichtet ist, mindestens eine Vorwärtsgangposition einzunehmen,
- einen Gangwahlhebel (614), der mit einer Gabel (1) fest verbunden ist, die sich im Inneren des Getriebes (608) erstreckt und dafür eingerichtet ist, mit dem Schieberad (12) zusammenzuwirken und durch dessen Verschiebung eine Änderung des Übersetzungsverhältnisses zwischen der Eingangswelle (21) und der Abtriebswelle (23) zu ermöglichen,
**dadurch gekennzeichnet, dass** es außerdem einen Flansch (612, 613) zur festen Verbindung des Wahlhebels (614) mit dem Getriebe (608) umfasst, der eine vorbestimmte Bruchfestigkeit aufweist und dafür eingerichtet ist zu brechen, falls die auf den Wahlhebel (614) ausgeübte Kraft einen vorbestimmten Wert überschreitet.

2. Getriebe (608) nach Anspruch 1, **dadurch gekennzeichnet, dass** das Gehäuse des Getriebes (608) von zwei Halbschalen gebildet wird, untere Halbschale (9) bzw. obere Halbschale (10) genannt, die einander gegenüber angeordnet sind und einen Aufnahmeraum insbesondere für die Wellen (21, 23), das Schieberad (12) und die Gabel (1) definieren, wobei die Halbschalen (9, 10) aus spritzgegossenem Kunststoff hergestellt sind.

3. Getriebe (608) nach Anspruch 2, **dadurch gekennzeichnet, dass** die Gabel (1) mit dem Gangwahlhebel (614) über einen Kupplungsbolzen (8) fest verbunden ist, wobei sich der Kupplungsbolzen (8) durch eine in der oberen Halbschale (10) ausgebildete Öffnung (40) hindurch erstreckt und im Inneren des Gehäuses angebracht ist.

4. Getriebe (608) nach Anspruch 3, **dadurch gekennzeichnet, dass** der Flansch (612, 613) schwenkbar auf der oberen Halbschale (10) angebracht ist.

5. Getriebe (608) nach Anspruch 3 oder 4, **dadurch gekennzeichnet, dass** sich der Kupplungsbolzen (8) in einer ersten Aufnahme erstreckt, die im Flansch (612, 613) ausgebildet ist.

6. Getriebe (608) nach einem der Ansprüche 1 bis 5, **dadurch gekennzeichnet, dass** der Gangwahlhebel (614) in einer zweiten Aufnahme angebracht ist, die im Flansch (612, 613) ausgebildet ist.

7. Getriebe (608) nach einem der Ansprüche 1 bis 6, **dadurch gekennzeichnet, dass** der Flansch (612, 613) von zwei Flanschhälften gebildet wird, die durch Mittel zur festen Verbindung (620) miteinander verbunden sind.

8. Getriebe (608) nach Anspruch 7, **dadurch gekennzeichnet, dass** eine Flanschhälfte (612) einen Gangwahlzapfen (617) trägt.

9. Getriebe (608) nach Anspruch 8, **dadurch gekennzeichnet, dass** der Gangwahlzapfen (617) Rastkerben (6171) umfasst, die dazu bestimmt sind, mit einem Rastelement (619) zusammenzuwirken, das drehbeweglich auf der oberen Halbschale (10) angebracht ist.

10. Motorisierte landwirtschaftliche Vorrichtung, **dadurch gekennzeichnet, dass** sie ein Getriebe (608) nach einem der Ansprüche 1 bis 9 umfasst.

## Claims

1. Gearbox (608) for a mechanized farming implement to interconnect motor means with elements for driving the implement, the gearbox (609) comprising:
- an input shaft (21) adapted to being driven in rotation by said motor means,
- an output shaft (23) adapted to driving said elements for driving the implement,
- a pinion, called a sliding pinion (12), mounted so as to be mobile on the input shaft (21) and adapted to occupying at least one gear position,
- a gear-speed selector lever (614) fixedly attached to a bracket (1) extending into the interior of the gearbox (508) and adapted to cooperating with said sliding pinion (12) and, by its shifting, enabling a modification of the transmission ratio between the input shaft (21) and the output shaft (23),
**characterized in that** it further comprises a clamp (612, 613) for fixedly attaching the selector lever (614) to the gearbox (608), having a predetermined breaking strength and being adapted to getting broken if the force applied to the selector lever (614) exceeds a predetermined value.

2. Gearbox (608) according to claim 1, **characterized in that** the casing of the gearbox (608) is formed by two half-shells, respectively called a lower half-shell (9) and an upper half-shell (10), laid out so as to be facing each other and defining a housing to receive the shafts (21, 23), the sliding pinion (12) and the bracket (1) especially, said half-shells (9, 10) being manufactured from injected plastic.

3. Gearbox (608) according to claim 2, **characterized in that** the bracket (1) is fixedly attached to the gear-speed selector lever (614) by means of a coupling finger (8), said coupling finger (8) extending through an aperture (40) made in said upper half-shell (10) and being mounted through the interior of said casing.

4. Gearbox (608) according to claim 3, **characterized in that** the clamp (612, 613) is mounted pivotingly on said upper half-shell (10).

5. Gearbox (608) according to claim 3 or 4, **characterized in that** said coupling finger (8) extends in a first housing made in the clamp (612, 613).

6. Gearbox (608) according to one of the claims 1 to 5, **characterized in that** the gear-speed selector lever (614) is mounted in a second housing made in the clamp (612, 613).

7. Gearbox (608) according to one of the claims 1 to 6, **characterized in that** the clamp (612, 613) is formed by two half-clamps assembled with each other by fixed attachment means (620).

8. Gearbox (608) according to claim 7, **characterized in that** a half-clamp (612) carries a gear-speed selector pivot (617).

9. Gearbox (608) according to claim 8, **characterized in that** the gear-speed selector pivot (617) comprises notches (6171) that are to cooperate with an indexer (619) mounted so as to be rotationally mobile on said upper half-shell (10).

10. Mechanized farming implement comprising a gearbox (608) according to one of the claims 1 to 9.
